# EUROPEAN PATENT APPLICATION

(11) **EP 0 799 879 A1**
(43) Date of publication of application: **08.10.1997**
(21) Application number: 97830144.8
(22) Date of filing: 25.03.1997
(51) Int. Cl.: C09K 19/54, G02F 1/1333

(54) **A composite polymer/liquid crystal material suitable for modulated light transmission, and the process for its manufacture**

(30) Priority: 04.04.1996 IT RM960218
(71) Applicant: MINISTERO DELL' UNIVERSITA' E DELLA RICERCA SCIENTIFICA E TECNOLOGICA, 00196 Roma (IT)
(72) Inventor: De Filpo, Giovanni, 87010 Doria (CS) (IT); Chidichimo, Giuseppe, 87036 Rende (CS) (IT)
(74) Representative: Bazzichelli, Alfredo

(57) **Abstract**

A new type of composite polymer/liquid crystal material is made of a mixture of the two components, in which the liquid crystal is not encapsulated by the polymer matrix, but is trapped therein in an irregular and continuous manner.

The new material preserves the mechanical and polymer adhesion properties, and can be used as an active electrolyte component in large surface displays.

The new materials, known as Polymer Entrapped Liquid Crystals (PELC), are opaque materials, highly scattering, that can become highly transparent by application of an electrical field.

Furthermore, unlike other polymer/liquid crystal compounds, their transparency does not change with changes in the angle of view, and they are thus particularly of use in applications with large surface areas and controllable optical transparency.

A process is also described for manufacture of this material, consisting in a phase separation induced by an extremely fast polymerisation, which is known as Fast Polymerisation Induced Phase Separation (FPIPS for short).

## Description

The present invention relates to a composite polymer/liquid crystal material, suitable for modulated light transmission, having a maximum transparency in which the light transmission level according to the angle of view is similar to that of the polymer itself without the liquid crystal content.

The present invention also relates to a process for manufacture of said material.

During recent years a number of composite polymer/liquid crystal materials have been created, and these have become extremely well known in opto-electrical type applications, such as the production of displays with large surface areas. In effect the liquid crystals are not per se appropriate materials for this kind of application.

A first problem is represented by the fact that control of optical transmission, through liquid crystal layers, requires the use of polarising layers which, as they can only be crossed by light components that are polarised in clearly specified directions, severely reduce overall luminosity.

A second problem is the fluidity of the liquid crystal substances, which makes it extremely difficult to obtain active layers with large surface areas and a constant thickness.

For this reason there has been a great deal of scientific effort to obtain composite materials capable of combining the optical properties of liquid crystals with the mechanical properties typical of polymers.

Encapsulated liquid crystals, their form of use in opto-electrical devices, and a method for their production have been described in the US patent No. 4.435.047 to J.L. Fergason. These encapsulated liquid crystals are made up of discrete micro-drops of liquid crystal within an encapsulating medium. The drops are both spherical, and of other geometrical shapes. The example given in the patent to Fergason relates to an encapsulated liquid crystal, confined in Polyvinylalcohol (PVA). Confinement is obtained by evaporation of the solvent from an aqueous emulsion of liquid crystal and PVA. The film obtained in known in the state of the art by the abbreviation NCAP.

US patent No. 4.688.900 to J.W. Doane et al, describes new methods of composite film production, making it possible to use a wide range of polymeric materials to confine the discrete drops of liquid crystal, and to obtain composite films suitable to be used for the production of large surface area displays. These new materials are know in the state of the art as Polymer Dispersed Liquid Crystal (abbreviated to PDLC).

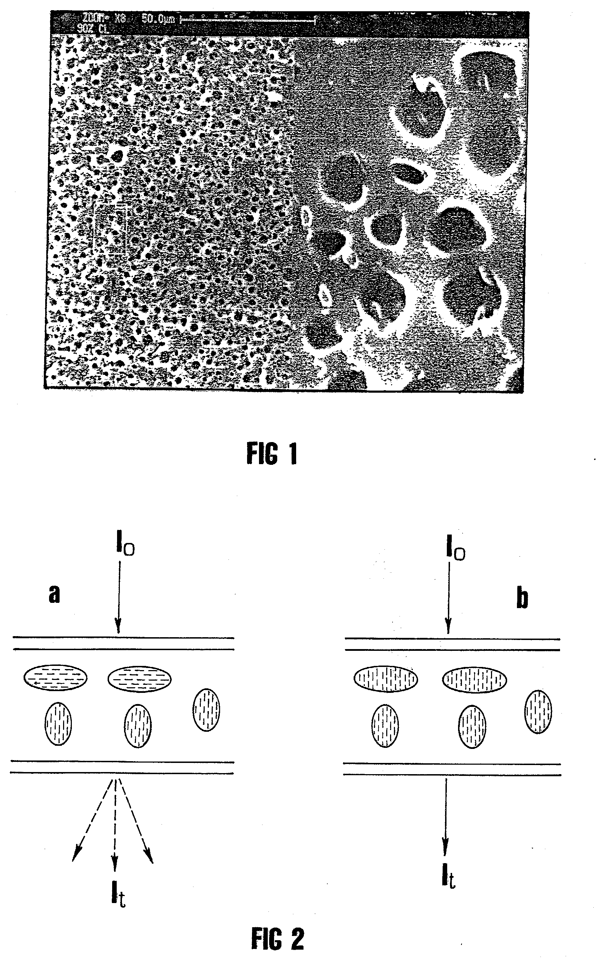

The structure of the materials mentioned above is of the type indicated in figure 1, which shows a electron microscope photograph of a typical PDLC material.

The holes visible on the surface are filled with liquid crystal.

Application of these films in display technology is illustrated in figure 1, where Io is incident light intensity and It of transmitted light intensity: figure 2a shows that orientation of the liquid crystal within the microdrops is not uniform, and also varies in overall distribution from drop to drop; this type of configuration is highly scattering; figure 2b shows that orientation of the liquid crystal becomes uniform over the whole material due to the effect of the electrical field. This configuration allows the passage of light.

The material mentioned above does not require the use of polarising devices when it is applied to display technology. This is related to the ability to control light scattering by means of external electrical fields.

In the absence of these fields the material is opaque, because of its lack of optical homogeneity, which is heightened by the optical anisotropy of the liquid crystal. The refraction index of the liquid crystal, in the case of a uniaxial system, is found to have two components in the main mesophase system: Ne for the polarisation component along the mesophase and No for the polarisation component perpendicular to the direction itself.

The inside of the liquid crystal microdrops is characterised by a variable distribution of direction, due to the disorganised effect of the polymeric surfaces.

This mechanism causes a high level of optical unevenness in the material and consequently effective light scattering, making the material opaque. When an electrical field is applied, the liquid crystal may be given a uniform direction over the whole of the film, which becomes transparent if the index of refraction of the polymer has been selected in such a way as to correspond with one of the components of the index of refraction of the liquid crystal (Ne when the direction is along the field, No when the direction is perpendicular to the field).

However the film is only perfectly transparent when viewed from one direction, usually that perpendicular to the surface of the film if the refraction indexes have been matched as indicated above. For other possible angles of view the refraction index of the liquid crystal no longer corresponds to the isotropic one of the polymer, and as a result the transparency is reduced.

Generally speaking, films of NCAP or PDLC materials gradually appear more and more opaque as the direction of view moves away from that perpendicular to the surface of the film. In the materials mentioned above optical transmission is severely decreased for angles of incidence exceeding 30 degrees.

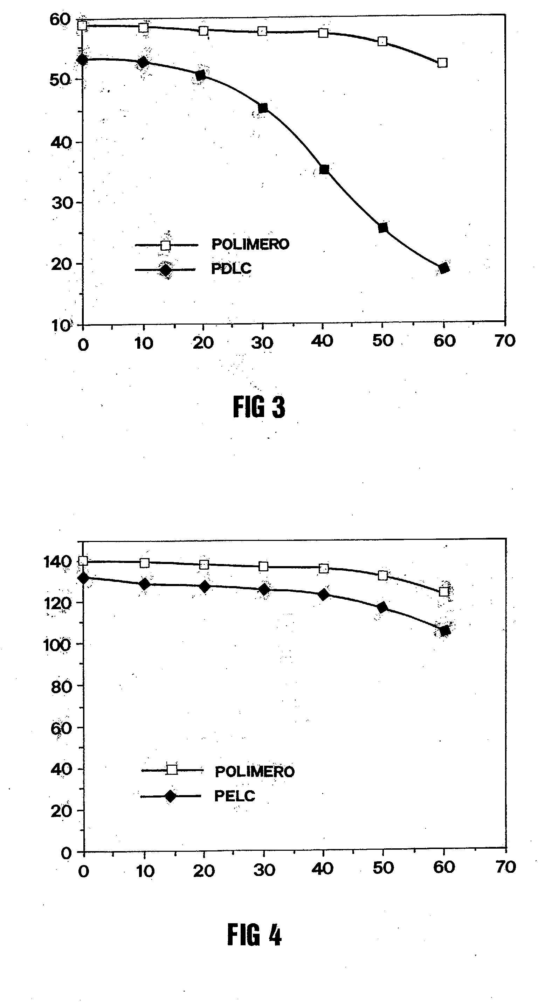

This effect is illustrated in figure 3, where the typical progress of transmitted light is shown according to the angle of view, which is defined as the angle formed between the direction perpendicular to the surface of the film and the direction of the incident light. The x-axis of the graph gives the angle of view and the y-axis gives the intensity of transmitted light, measured in Arbitrary Units. It should be noted that above 30° the PDLC film shows a severe reduction in transmitted light, compared with the polymer alone.

This problem is solved using a new type of composite polymer/liquid crystal material in which the polymer is dispersed in the liquid crystal and the liquid crystal medium is not encapsulated in microdrops or confined in separate portions, but is intimately mixed with the polymer itself, giving a continuous and irregular distribution.

This material, which will hereinafter be termed Polymer Entrapped into Liquid Crystals (abbreviated to PELC) is naturally opaque, but is made transparent by application of electrical fields, in a similar manner to NCAP or PDLC films. Furthermore, the particular morphological nature of the material is such that it advantageously has a Haze value (residual scattering) of around 1% for angles of view below 60 degrees, even if the optical contrast remains extremely high, as will be illustrated in the following description.

The quantity ratio of the two components, polymer and liquid crystal, is of the same type normally used in NCAP or PDLC, but the range of concentrations within which the material can be obtained varies from 20 to 70% by weight of liquid crystal.

An alternative version of the material according to the present invention is perfectly transparent in its natural state.

It passes from the transparent state to the opaque one by turning the mesogenous molecules by means of external fields, in this way setting the liquid crystal index at variance with that of the polymer, thus carrying out a function equal and opposite to that of the above mentioned raw material.

Said material is obtained by means of a process which forms a further object of the present invention, and which is defined as Fast Polymerisation Inducing phase Separation (abbreviated to FPIPS) . It has, in fact been surprisingly found that by dispersing a polymer in a liquid crystal medium the latter takes on a continuous and irregular distribution, when the speed of polymerisation of the polymer precursor is very high. Use has therefore been made of initial monomers that, due to the effect of UV light, polymerise in times below 100 milliseconds, in a nitrogen environment and with a conversion level of between 80% and 85%.

The level of adhesion of the new PELC compounds to glass or plastic supports remains as high as that of PDLC compounds.

An object of the present invention is therefore a composite liquid crystal material, suitable for modulated light transmission, characterised by the fact that it is formed of a polymer dispersed in a liquid crystal medium, which is intimately mixed with the polymer itself by means of continuous and irregular distribution, so that sand material has a state of maximum transparency in which variation of the light transmission level according to the angle of view is similar to that of the polymer itself without the liquid crystal.

A further object of the present invention is a process for obtaining a composite polymer/liquid crystal material in which the starting monomers are selected from diacrylate monomers with a refraction index such that a mixture thereof gives a resulting refraction index in accordance with that of the liquid crystal.

A further object of the present invention is an electrolytic device characterised by the fact that it is made up of a film of composite polymer/liquid crystal material, contained between conductive glass or plastic surfaces, with an optical transmission factor that can be varied by application of electrical fields.

Further characteristics of the present invention will be underlined with the aid of the figures enclosed and the examples of embodiment, provided merely as nonlimiting examples, in which:
figure 1 shows an electron microscope photograph of a typical PDLC material;
figure 2 shows application of films in display technology;
figure 3 shows the progress of optical transmission according to the angle of view;
figure 4 shows the progress of opto-electrical response at 60 volts and 1 Khz of the PELC film in comparison with the transmission level of a similar cell formed using polymer alone;
figure 5a shows a photograph of the morphology of the material according to the present invention, obtained according to example 1, using an electron microscope;
figure 5b shows a photograph of the same material of example 1 under polarised light, using an optical microscope;
figure 6a shows a photograph of the material obtained from example 2 using an electron microscope;
figure 6b shows a photograph of the material obtained from example 2 using an optical microscope.

The monomers suitable for carrying out the process and forming the material object of the present invention have a refraction index such that they can be fitted to that of the liquid crystal.

They are selected from the family of diacrylate monomers.

### Example 1

After selecting the monomers
Propylate Bisphenol A-Diacrylate (abbreviated to PBAD) having a refraction index of 1,5570
and Tri-Propylen-Glycol-Diacrylate (abbreviated to TPGDA) having a refraction index of 1,450,
the Liquid Crystal E7 manufactured by Merck was mixed in a proportion of 45% by weight, at room temperature, with a mixture of PBAD:TPGDA: photoinitiator in a ratio by weight equivalent to 1: 2.2: 0.16. IRGACURE 651, manufactured by Haldrich, was used as a photoinitiator.

A film of this mixture with a thickness of 30µ was deposited between glass slides with conductive surfaces (for example obtained using an ITO thin layer). The cell prepared in this way was made to undergo UV irradiation, produced by a mercury vapour lamp (Philips HKP 125 W), keeping it at a distance of approximately 3 cm from the lamp.

The opto-electrical response of the PELC film at 60 volts, 1 Khz, is given, according to the angle of view, in figure 4. The same figure also shows the optical transmission of a similar cell to the one described above, but containing the polymeric material alone without the liquid crystal.

It can be seen that the light transmission of the PELC cell and that of the cell containing the polymer along have a similar angular dependence.

This means that the slight fall in transmission for angles of view exceeding 40° in the PDLC cell is not due to Haze, but in all probability to reflection.

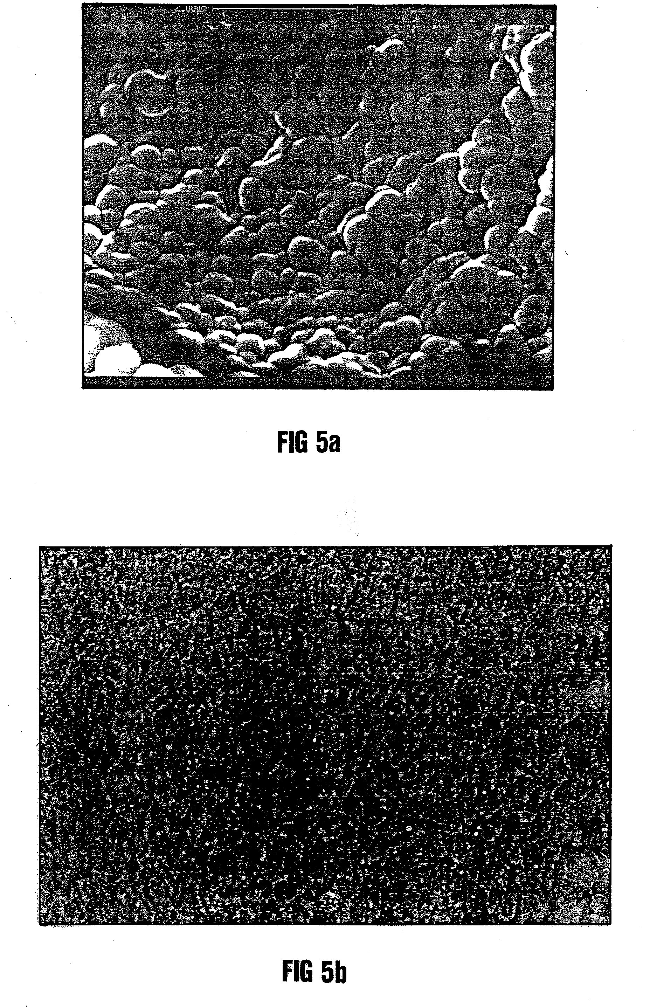

The morphology of the material is illustrated in the photograph obtained using SEM (Scanning Electron Microscopy) and given in figure 5a. The material appears morphologically very different from those that can be classified as PDLC or NCAP: in effect there is no sign of the typical "Swiss Cheese" structure, which on the contrary can be seen in figure 1. A photograph obtained using an optical microscope under polarised light is also shown in figure 5b. The lighter patches are areas of liquid crystal.

### Example 2

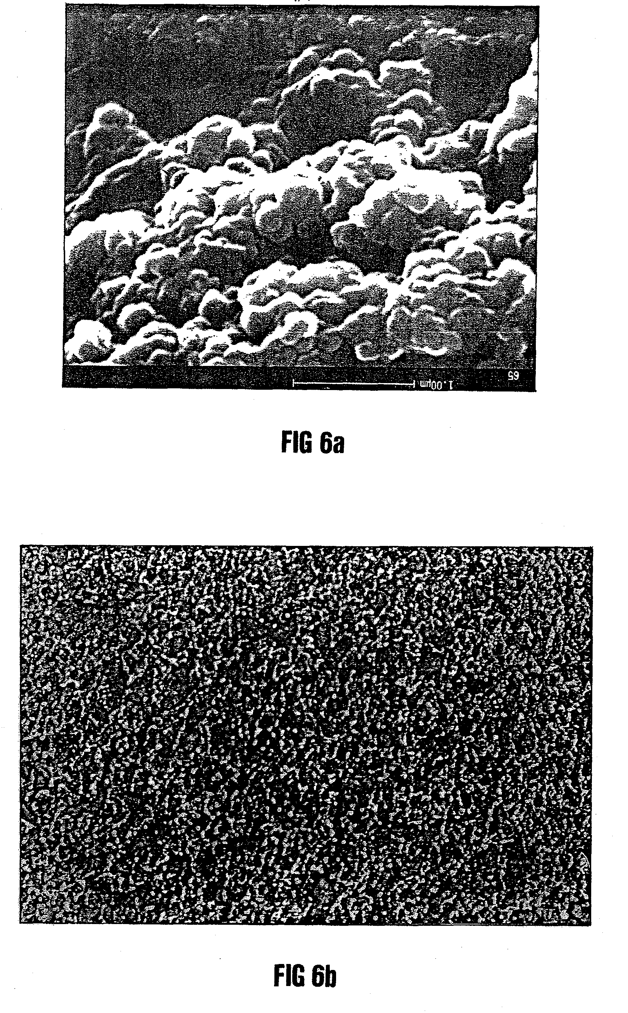

Liquid Crystal E7 was mixed in a proportion by weight equivalent to 65% with the same polymer mixture used in example 1. The PELC cell was prepared in the manner described in example 1. The morphology of the material is illustrated in the SEM and optical microscope photographs given in figures 6a and 6b.

## Claims

1. A composite/liquid crystal material, suitable for modulated light transmission, characterised in that it is formed of a polymer dispersed in a liquid crystal medium, which is intimately mixed with the polymer itself by means of a continuous and irregular distribution, so that said material has a state of maximum transparency in which the variation of the light transmission level according to the angle of view is similar to that of the polymer itself without the liquid crystal.

2. A composite polymer/liquid crystal material according to claim 1, characterised in that the polymer is formed from the polymerisation of starting monomers selected from those having a polymerisation time of under 100 milliseconds, with a conversion of between 80% and 85%.

3. A composite polymer/liquid crystal material according to claim 1 or 2, characterised in that it has a residual scattering value (Haze) of around 1% for angles of view lower than 60°.

4. A composite polymer/liquid crystal material according to any one of the preceding claims, characterised in that the interval of concentration within which the material is obtained varies between 20% and 70% by weight of liquid crystal.

5. A process for obtaining a composite polymer/liquid crystal material as claimed in any one of claims 1 to 4, characterised in that the starting monomers are selected from diacrylate monomers with a refraction index in accordance with that of the liquid crystal.

6. A process according to claim 5, characterised in that a mixture formed from the monomer Propylate-Bisphenol A-Diacrylate (PBAD) and from the monomer Tri-Propylen-Glycol-Diacrylate (TPGDA) is selected to obtain the transparent polymeric matrix.

7. A process according to any one of claims 5 or 6, in which the polymerisation reaction of the starting monomers is carried out in a nitrogen environment.

8. A process according to any one of claims 5 to 7, characterised in that the polymerisation takes place using ultraviolet light.

9. An opto-electrical device, characterised in that it is made up of a film of composite polymer/liquid crystal material as claimed in any one of claims 1 to 4, contained between conductive glass or plastic surfaces, with optical transmission levels that can be varied by application of electric fields.

10. An opto-electrical device according to claim 9, characterised in that the progress of its light transmission value is independent of the angle of view within an angle of view ranging from 0° to 60°.

11. An opto-electrical device according to claims 9 or 10, characterised in that it has a residual scattering value (Haze) of around 1%.

12. An opto-electrical device according to any one of claims 9 to 11, characterised in that it is transparent in its normal condition and becomes opaque upon application of external fields.
